# EUROPEAN PATENT APPLICATION

(11) **EP 1 892 632 A1**
(43) Date of publication of application: **27.02.2008**
(21) Application number: 06016736.8
(22) Date of filing: 10.08.2006
(51) Int. Cl.: G06F 13/40

(54) **Interface card and a computer motherboard which are used in a horizontal adaptation**

(71) Applicant: Liantec Systems Corporations, Chung-Ho City T'ai pei 235 (TW)
(72) Inventor: Yin, Che-Yong, Chung-Ho City Taipei Hsien 235 (TW)
(74) Representative: Becker Kurig Straus

(57) **Abstract**

An interface card and a computer motherboard which are used in a horizontal adaptation include a motherboard which is configured with at least two sets of first slots; and at least one interface card, a side of which is provided with at least two sets of adapting parts being correspondingly plugged into the aforementioned two sets of first slots, and one set of the adapting part which is connected with a circuit of the interface card. Through the two sets of first slots on the motherboard to be correspondingly assembled with the two sets of adapting parts on the interface card, the interface card can be firmly positioned on the motherboard; through the adapting part, which is connected with the circuit of interface card, to be plugged into the corresponding first slot, the interface card can be electrically conducted with the motherboard, to proceed with an exchanging and processing of messages.

## Description

### BACKGROUND OF THE INVENTION

### (a) Field of the Invention

The present invention relates to an interface card and a computer motherboard which are used in a horizontal adaptation, and more particularly to an interface card and a computer motherboard which provide a horizontal adaptation for an interface card, so as to sufficiently save a space and to firmly position the interface card for improving a quality of conduction and contact.

### (b) Description of the Prior Art

As a computer motherboard is configured with a central process unit, it is provided with a basic computing power. However, an operation of the central processing unit is limited, and a progression and results of processing still need to be interacted with a peripheral equipment; therefore, the computer motherboard should be configured with an interface card. A purpose of the interface card is to increase a function that the computer motherboard does not provide by itself, and the interface card is a bridge of communication between the computer motherboard and the peripheral equipment (such as a monitor). According to a user's requirement, a connector on the computer motherboard is expanded, and instructions issued by the central processing unit are correctly transmitted to the expanded peripheral equipment, or the central processing unit is aided for processing data messages which are related to computation, through the interface card.

There are many kinds of interface cards, such as a PCl (Personal Computer Interface) display card, an AGP (Advanced Graphics Processor) display card, an IDE (Integrated Drive Electronics) expansion card, a SATA (Serial Advanced Technology Attachment) expansion card, a SCSI (Small Computer Serial Interface) interface card, a USB (Universal Serial Bus) expansion card, a 1394 interface card, an audio card, or a network card.

To support the interface cards, connectors of corresponding specifications are installed by a spacing on the computer motherboard, such as a PCI slot, or an AGP slot, etc., and a side end of the interface card is provided with an adapter to fit with the connector on the computer motherboard, such that all display cards can be vertically installed on the computer motherboard by a spacing, respectively.

However, the aforementioned structures are implicitly provided with many shortcomings in manufacturing and usage:
1. For the aforementioned conventional structures, as a space of computer casing is limited, when the interface cards are vertically inserted on the computer motherboard by a spacing, heights of the interface cards are easily interfering with and colliding the computer casing of limited space. In particular, for the computer casing of a bare bone system which emphasizes miniaturization and dedicates to a saving of space, it is a great obstruction. Therefore, many interface cards of a powerful function but with a size of height which is too large should be abandoned on the existing computer motherboard applied to the computer casing of bare bone system, thereby sacrificing a performance of computer motherboard which should be available through the support of interface cards, while focusing on the miniaturization.
2. For the aforementioned conventional structures, as the interface card can only be plugged into the connector on the computer motherboard by the adapter at its side end, this kind of single-point connection method is very unstable. In particular, for a relatively large interface card, such as the display card, it is easy to result in a shaking of weight center and instability, thereby influencing a quality of contact between the interface card and the computer motherboard to greatly affect the usage.

### SUMMARY OF THE INVENTION

The primary object of present invention is to provide an interface card and a computer motherboard which are used in a horizontal adaptation, and more particularly to an interface card and a computer motherboard which provide a horizontal adaptation for the interface card, and further provide a mutual stacking for plural sets of interface cards, so as to sufficiently save a space of usage, and to firmly position the interface cards for improving a quality of conduction and contact.

Accordingly, to achieve the aforementioned objects, the present invention provides an interface card and a computer motherboard which are used in a horizontal adaptation, including a motherboard on which is configured with at least two sets of first slots; at least one interface card, a side of which is provided with at least two adapting parts to be correspondingly plugged into the aforementioned at least two sets of the first slots respectively, with one set of the adapting part being connected with a circuit of the interface card.

Accordingly to the aforementioned structures, through the at least two sets of first slots on the computer motherboard to be assembled with the at least two sets of adapting parts on the interface card, the interface card can be firmly positioned on the motherboard; whereas through the adapting part, which is connected with the circuit of interface card, to be plugged into the first slot, the interface card is electrically conducted with the motherboard, thereby proceeding with a processing and exchanging of messages.

To enable a further understanding of the said objectives and the technological methods of the invention herein, the brief description of the drawings below is followed by the detailed description of the preferred embodiments.

### BRIEF DESCRIPTION OF THE DRAWINGS

FIG. 1 shows a perspective view of the present invention.
FIG. 2 shows an exploded view of the present invention.
FIG. 3 shows an exploded view at another view angle of an interface card of the present invention.
FIG. 4 shows a perspective view of a second embodient of the present invention.
FIG. 5 shows an exploded view of a second embodient of the present invention.
FIG. 6 shows an exploded view at another view angle of an interface card of a second embodient of the present invention.

### DETAILED DESCRIPTION OF THE PREFERRED EMBODIMENTS

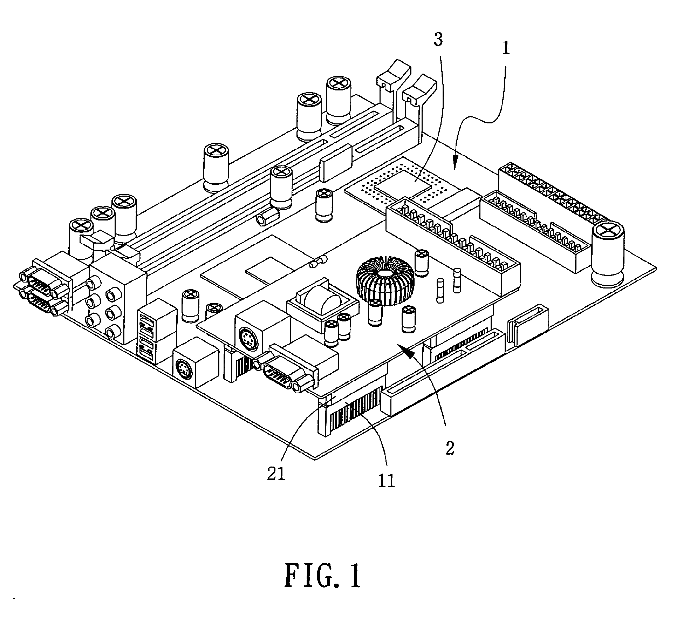

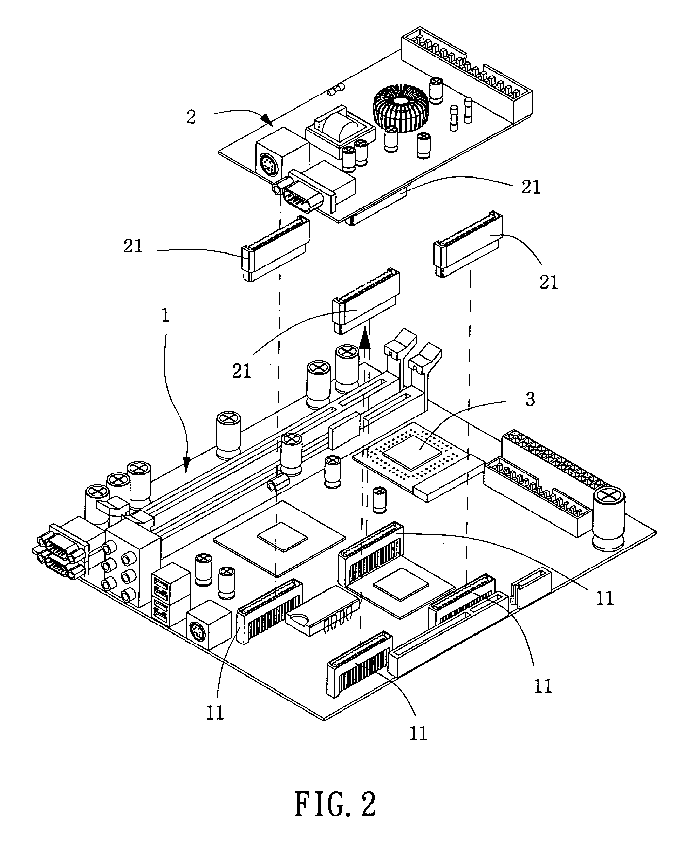

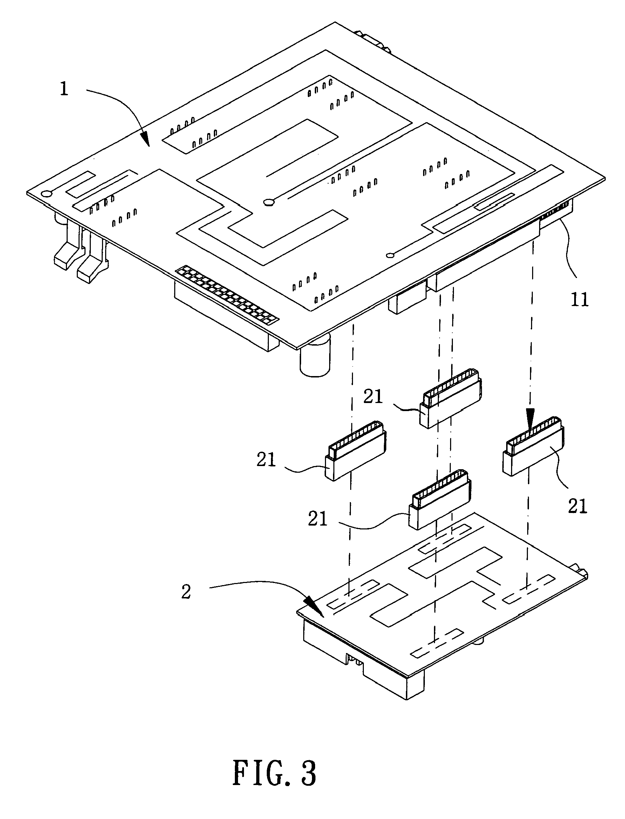

Referring to FIGS. 1 to 3, the present invention comprises a motherboard 1 and an interface card 2, wherein the motherboard 1 is configured with an array of four sets of first slots 11, a bottom side of the interface card 2 is configured with an array of four sets of adapting parts 21 which are correspondingly plugged into the aforementioned four sets of first slots 11, and a specific set of the adapting part 21 on the interface card 2 is connected with a circuit of the interface card 2.

The aforementioned first slot 11 can be an ISA (Industry Standard Architecture) specification, a VESA (Video Electronics Standards Association) specification, or a VGA (Video Graphics Array) specification; whereas each adapting part 21 is corresponding to each first slot 11 and therefore can be also an ISA specification, a VESA specification, or a VGA specification.

Referring to FIGS. 1 to 3, in implementing the aforementioned structures, by correspondingly plugging and assembling the four sets of adapting parts 21 at the bottom side of interface card 2 into the four sets of fist slots 11 on the motherboard 1, the interface card 2 can be emplaced horizontally on the motherboard 1 and firmly positioned. In addition, through the electric connection of the adapting part 21, which is connected with the circuit of interface card 2, with the first slot 11, the interface card-2 can be electrically conducted with the motherboard 1; so that the interface card 2 can assist a central processing unit 3 on the motherboard 1 to proceed with a processing of data messages related to computation, or to correctly transmit the instructions issued by the central processing unit 3 to an expanded peripheral equipment, through the motherboard 1, the first slots 11, the adapting part 21 which is connected with the circuit of interface card 2, and the interface card 2, orderly, so as to proceed with a display, exchanging, or processing of the messages, or to display to a user in a way that the user can understand, through the peripheral equipment.

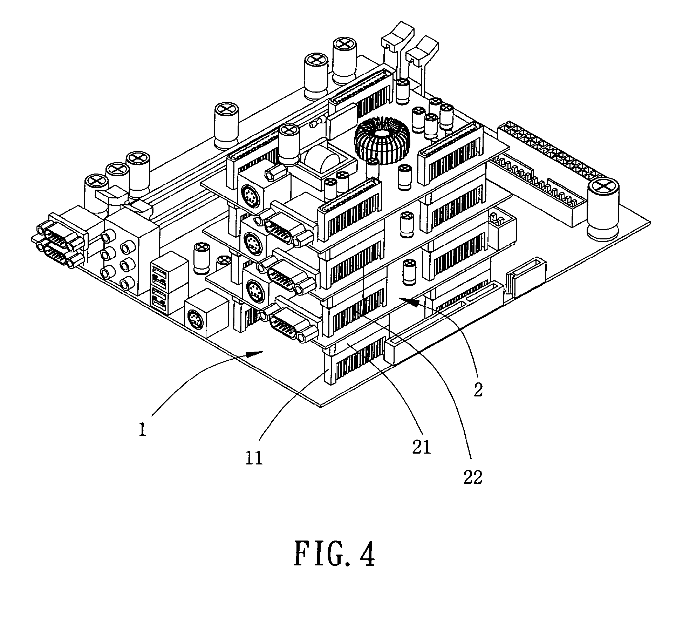

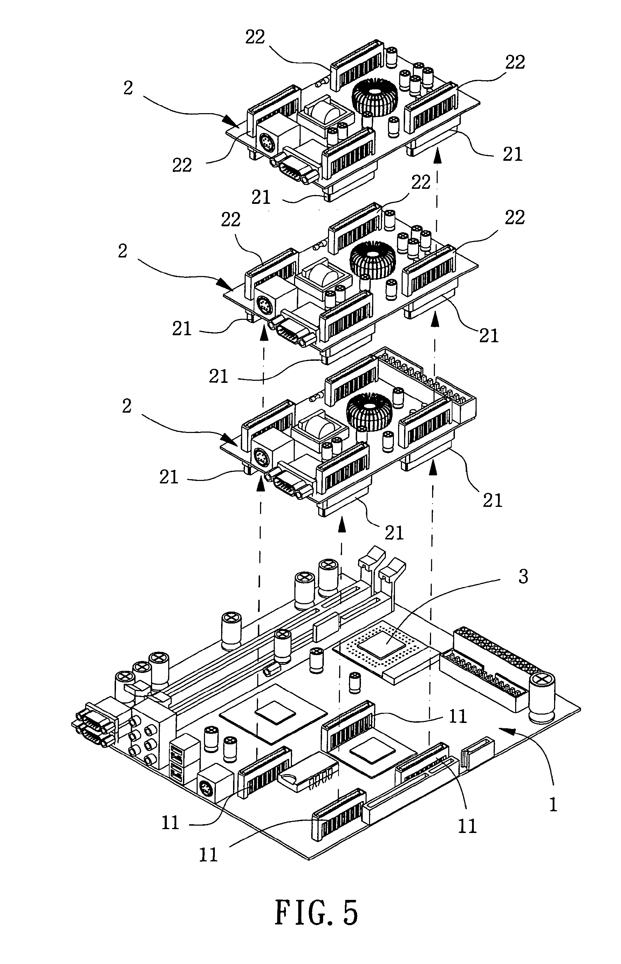

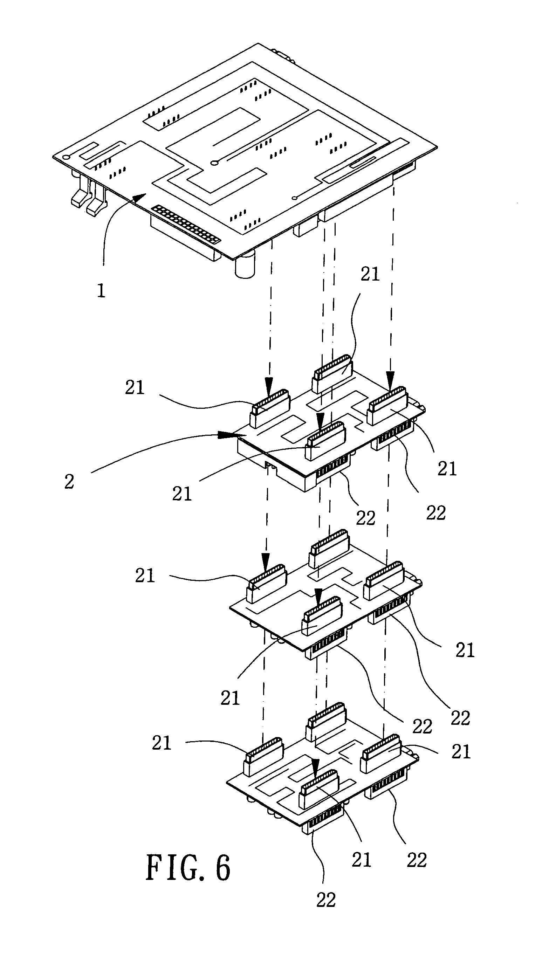

Referring to FIGS. 4 to 6, it shows a second embodient of the present invention. In the aforementioned structures, the motherboard 1 is provided with four sets of interface cards 2 which are mutually stacked, wherein other ends of the four sets of adapting parts 21 of each interface card 2 are corresponding to a second slot 22 respectively, an array of four sets of second slots 22 is configured at a top side of each interface card 2, and each adapting part 21 of each interface card 2 is exactly plugged into each second slot 22 of the other interface card 2 respectively, such that the four sets of interface cards 2 are stacked with each other horizontally, and the four sets of adapting parts 21 on the bottommost interface card 2 are plugged into the four sets of first slots 11 on the motherboard 1 correspondingly. In particular, one set of adapting part 21 is defined on the four sets of interface card 2 respectively, to be connected with the circuit of interface card 2, and the adapting part 21 is located on a different serial path respectively, such that the four sets of interface cards 2 can be communicated with the motherboard 1 independently. Additionally, each adapting part 21, which is corresponding to each first slot 11, can also be an ISA specification, a VESA specification, or a VGA specification.

Referring to FIGS. 4 to 6, in implementing the aforementioned structures, by correspondingly plugging and assembling the four sets of adapting parts 21 at the bottom side of interface card 2 into the four sets of fist slots 11 on the motherboard 1, the interface card 2 can be emplaced horizontally on the motherboard 1 and firmly positioned. Furthermore, through the correspondence of four sets of second slots 22 at the top side of interface card 2 to the four sets of adapting parts 21 at the bottom side of the other interface card 2, the four sets of interface cards 2 are mutually stacked, and can be communicated with the computer motherboard 1 independently. As each interface card 2 is electrically conducted with the motherboard 1 independently, each interface card 2 can be controlled by the motherboard 1 individually, to assist the central processing unit 3 on the motherboard 1 for proceeding with the processing of data messages related to computation, or to correctly transmit the instructions issued by the central processing unit 3 to the expanded peripheral equipment, through the motherboard 1, the first slot 11 and at least one set of adapting part 21 between each interface card 2, and the serial path which is constituted by at least one set of second slot 22, and the correct interface card 2, orderly, so as to proceed with the display, exchanging, or processing of the messages, or to display to the user in the way that the user can understand, through the peripheral equipment.

Accordingly, the present invention is provided with the following advantages:
1. According to the structures of present invention, the present invention is specially applied to a small scale computer casing, such as the computer casing of a bare bone system. As an interior space of the computer casing of bare bone system is limited, the interface card 2 of present invention is installed horizontally on the computer motherboard 1 by a spacing, such that the interface card 2 is parallel to the motherboard 1 to prevent the height of interface card 2 from interfering with and colliding the computer casing of limited space, thereby achieving the object of saving a space of usage, facilitating a more miniaturized design of computer casing, not needing to reduce the size of height of interface card 2, and keeping a performance of the interface card 2 it should be available to provide a larger supportive efficiency for the motherboard 1.
2. According to the structures of present invention, the bottom side of interface card 2 is provided with the plural sets of adapting parts 21 to be plugged into the first slots 11 on the computer motherboard 1, to form a multiple-point fixation on one surface for enhancing the stability of plugging the interface card 2, such that a relatively large interface card 2, such as a display card, is easy to be firmly positioned; thereby improving a quality of contact between the interface card 2 and the computer motherboard 1, and reducing a condition of short-circuit.
3. According to the structures of present invention, the plural sets of interface cards 2 can be stacked with each other horizontally, and each set of interface card 2 can be communicated with the computer motherboard 1 independently, by a mutual plugging of the adapting parts 21 into the second slots 22 on the interface cards 2.

It is of course to be understood that the embodiments described herein is merely illustrative of the principles of the invention and that a wide variety of modifications thereto may be effected by persons skilled in the art without departing from the spirit and scope of the invention as set forth in the following claims.

## Claims

1. An interface card and a computer motherboard which are used in a horizontal adaptation, comprising a motherboard on which is configured with at least two sets of first slots; and at least one interface card, a side of which is provided with at least two sets of adapting parts being correspondingly plugged into the aforementioned two sets of first slots, respectively, and one set of the adapting part on which is connected with a circuit of the interface card; through the at least two sets of first slots on the motherboard to be assembled with the at least two sets of adapting parts on the interface card, the interface card being firmly positioned on the motherboard; whereas through the adapting part, which is connected with the circuit of interface card, to be correspondingly plugged into the first slot, the interface card being electrically conducted with the motherboard to proceed with an exchanging and processing of messages.

2. The interface card and a computer motherboard which are used in a horizontal adaptation, according to claim 1, wherein the first slot is an ISA (Industry Standard Architecture) specification, and the adapting part, which is corresponding to the first slot, is also an ISA specification.

3. The interface card and a computer motherboard which are used in a horizontal adaptation, according to claim 1, wherein the first slot is a VESA (Video Electronics Standards Association) specification, and the adapting part, which is corresponding to the first slot, is also a VESA specification.

4. The interface card and a computer motherboard which are used in a horizontal adaptation, according to claim 1, wherein the first slot is a VGA (Video Graphics Array) specification, and the adapting part, which is corresponding to the first slot, is also a VGA specification.

5. The interface card and a computer motherboard which are used in a horizontal adaptation, according to claim 1, wherein the bottom side of interface card is provided with at least two sets of adapting parts.

6. The interface card and a computer motherboard which are used in a horizontal adaptation, according to claim 1, wherein the motherboard is provided with four sets of first slots, and the interface card is correspondingly provided with four sets of adapting parts.

7. The interface card and a computer motherboard which are used in a horizontal adaptation, according to claim 1, wherein other ends of at least two sets of adapting parts on the interface card are corresponding to a second slot, respectively.

8. The interface card and a computer motherboard which are used in a horizontal adaptation, according to claim 7, wherein a top side of the interface card is configured with the second slot.

9. The interface card and a computer motherboard which are used in a horizontal adaptation, according to claim 7, wherein each adapting part of the interface card is exactly plugged into each second slot of the other interface card, such that at least two sets of interface cards are stacked with each other.

10. The interface card and a computer motherboard which are used in a horizontal adaptation, according to claim 9, wherein the adapting part is an ISA specification, and the second slot, which is corresponding to the adapting part, is also an ISA specification.
